# EUROPÄISCHE PATENTANMELDUNG

(11) **EP 2 692 481 A1**
(43) Veröffentlichungstag der Anmeldung: **05.02.2014**
(21) Anmeldenummer: 12179304.6
(22) Anmeldetag: 03.08.2012
(51) Int. Cl.: B23Q 1/62, B23Q 11/00, B23K 37/02

(54) **Strahlbearbeitungsvorrichtung**

(71) Anmelder: Bystronic Laser AG, 3362 Niederönz (CH)
(72) Erfinder: Bossoni, Sergio, 8048 Zürich (CH); Seiler, Thomas, 3661 Uetendorf (CH)
(74) Vertreter: Patentbüro Paul Rosenich AG

(57) **Zusammenfassung**

Die Erfindung betrifft eine Strahlbearbeitungsvorrichtung (100) mit einer ersten Plattform (1), mit einer an der ersten Plattform (1) beweglich gelagerten zweiten Plattform (2), mit einem von der zweiten Plattform (2) gehaltenen Strahlbearbeitungskopf (3) zur Bearbeitung eines Werkstückes (5) mit einem Strahl. Kopplungsmechanismen (51, 52) sorgen dafür, dass in der beweglichen Lagerung zwischen erster und zweiter Plattform (1, 2) Gegenmassen synchronisiert zum Strahlbearbeitungskopf (3) bewegt werden.

## Beschreibung

Die Erfindung betrifft eine Strahlbearbeitungsvorrichtung insbesondere eine Laserstrahl-Bearbeitungsvorrichtung oder eine Fluidstrahl-Bearbeitungsvorrichtung mit einer ersten Plattform, mit einer an der ersten Plattform beweglich gelagerten zweiten Plattform, mit einem von der zweiten Plattform gehaltenen Strahlbearbeitungskopf zur Bearbeitung eines Werkstückes mit einem Strahl. Die zweite Plattform ist mit der ersten Plattform über ein erstes Verschiebeelement und ein zweites Verschiebeelement verbunden und das erste Verschiebeelement ist an der ersten Plattform entlang einer ersten Linearachse verschiebbar gelagert und das zweite Verschiebeelement ist an der ersten Plattform entlang einer zweiten Linearachse verschiebbar gelagert, wobei die erste Linearachse und die zweite Linearachse zueinander geneigt sind, vorzugsweise um 90°. Die zweite Plattform ist am ersten Verschiebeelement entlang einer dritten Linearachse verschiebbar gelagert und am zweiten Verschiebeelement entlang einer vierten Linearachse verschiebbar gelagert, wobei die erste Linearachse und die vierte Linearachse im Wesentlichen parallel zueinander verlaufen bzw. stehen und die zweite Linearachse und die dritte Linearachse im Wesentlichen parallel zueinander verlaufen bzw. stehen. Weiter weist die Strahlbearbeitungsvorrichtung einem ersten Antrieb, der mit dem ersten Verschiebeelement zusammenwirkt, um das erste Verschiebeelement relativ zur ersten Plattform entlang der ersten Linearachse zu verfahren, und einen zweiten Antrieb auf, der mit dem zweiten Verschiebeelement zusammenwirkt, um das zweite Verschiebeelement relativ zur ersten Plattform entlang der zweiten Linearachse zu verfahren. Weiter weist die Strahlbearbeitungsvorrichtung eine erste Gegenmasse, die an der ersten Plattform entlang einer fünften Linearachse verschiebbar gelagert ist, und eine zweite Gegenmasse auf, die an der ersten Plattform entlang einer sechsten Linearachse verschiebbar gelagert ist, wobei die erste Linearachse und die fünfte Linearachse im Wesentlichen parallel zueinander verlaufen bzw. stehen und die zweite Linearachse und die sechste Linearachse im Wesentlichen parallel zueinander verlaufen bzw. stehen.

Um eine hochdynamische und gleichzeitig hochpräzise Strahlbearbeitung von Werkstücken zu gewährleisten, muss die Bewegung des Strahlbearbeitungskopfes exakt definiert und kontrollierbar sein. Die Anforderungen an die zugrundeliegende Mechanik sind dabei sehr hoch.

Beim linearen Beschleunigen von Massen (wie z.B. Strahlbearbeitungskopf), wie dies in kartesischen Bewegungseinheiten der Fall ist, entstehen entsprechende Reaktionskräfte auf Antriebsseite, die auf die Halterung der Bewegungseinheit wirken. Diese Störkräfte haben verschiedene negative Effekte wie z.B. Störungen auf Hauptachsen beim Einsatz als überlagerte Achsen, aber auch störende Vibrationen auf Werkstücke beim Einsatz als eigenständige Maschine.

Diese Störungen führen bei vorgegebener Dynamik zu verminderter Genauigkeit der geschnittenen Teile oder zu einer verringerten Dynamik bei gleichbleibender Genauigkeit.

Eine Minimierung der translatorisch beschleunigten Massen kommt schnell an die Grenze, weil auch geringe Massen bei hohen Beschleunigungen störende Kräfte ergeben.

Eine Kompensation der Störkräfte kann mit Zusatzantrieben erfolgen. Im Fall überlagerter Achsen können die von den überlagerten Achsen verursachten Störkräfte auf die grösseren unterlagerten Achsen durch eine Kraftvorsteuerung kompensiert werden. Dies benötigt aber sehr dynamische Hauptachsantriebe mit zusätzlicher Leistung und eine sehr aufwändige Steuerung. Ausserdem wird die Maschinenstruktur unnötig mit hochfrequenten Lasten angeregt, was zu erhöhten Anforderungen an die Maschinenstruktur bzw. zu weniger guter Bahngenauigkeit führen kann.

Eine Vermeidung von Störkräften mit zusätzlich angetriebenen Gegenmassen benötigt zusätzliche Bewegungsachsen. Dies ist nicht zuletzt aus Kostengründen zu vermeiden.

Im Folgenden werden die im Stand der Technik beschriebenen Ansätze zusammengefasst:

Bekannt ist insbesondere der Einsatz überlagerter Bewegungen für dynamisches Laserschneiden, jedoch ohne Berücksichtigung von Störkräften. Bekannt ist auch der Einsatz von Kreuztischen nach vergleichbarem Prinzip, aber ohne Minimierung der Störkräfte.

Die EP1294544B1 (entspricht der US7886629B2) offenbart einen kartesischen, parallelkinematischen Antrieb für eine Laserbearbeitungsmaschine (mit Hauptachsen und überlagerten Achsen in X-Y Richtung). Gegenmassen werden in dieser Druckschrift nur beiläufig erwähnt, wobei diese Druckschrift weder eine Lehre darüber enthält, ob sich die Gegenmassen auf die vertikale Achse oder die horizontalen Achsen beziehen, noch eine Lehre über deren Einbindung in das kinematische System.

Auch die EP2283963A1 offenbart einen Antrieb für eine Laserbearbeitungsmaschine mit einer halbredundanten Kinematik, bei der nur eine Achse überlagert ist. Ein Massenausgleich ist nicht vorgesehen. Die Störkräfte durch überlagerte Beschleunigung des Schneidkopfes beeinträchtigen die Bewegung des Trägers.

Ein anderer Ansatz zur Verminderung der Störkräfte betrifft die Minimierung der translatorisch beschleunigten Massen. Bei solchen Lösungen wird nur die Schneiddüse translatorisch bewegt, während der Strahl durch umlenkende und/oder reflektierende Einheiten (z.B. Scanner) geführt wird. Nachteile ergeben sich durch bewegte Teile im Strahlengang und eine aufwändige Optik.

Ein weiterer Ansatz betrifft die Minimierung von Störkräften durch Beschleunigung von Ausgleichsmassen mittels eigener Zusatzantriebe.

In diesem Zusammenhang offenbart die EP1724054B1 ein kartesisches, parallelkinematisches System mit Gegengewichten für eine Werkzeugmaschine. Das jeweilige Gegengewicht wird dabei von einem eigenen Antrieb angetrieben. Dies bedeutet, dass der Linearachse, entlang der der Laserbearbeitungskopf bewegt wird, ein Antrieb zugeordnet ist und das Gegengewicht einen gesonderten Antrieb aufweist. Der Nachteil einer derartigen Lösung besteht darin, dass die Masse der Gesamtanordnung durch die zusätzlichen Antriebe enorm erhöht wird, wodurch beschleunigungs- und trägheitsbedingte Störungen bzw. eine Verminderung der Dynamik einhergehen. Ausserdem erfordert diese Lösung eine regelungstechnische Synchronisierung der getrennten Antriebe, die teuer und wartungsintensiv ist. Die Massnahmen für eine exakt aufeinander abgestimmte, synchronisierte Ansteuerung der Antriebe für den Strahlbearbeitungskopf einerseits und für die Gegenmassen andererseits sind ebenfalls kostspielig und fehleranfällig.

Ähnlich zur EP1724054B1 sind die W02006075209A2 (entspricht US7910857B2), die EP1838486A1 und die EP1793963B1 mit jeweils gesonderten Antrieben für Laserkopf und Gegengewichte.

Die EP1758003B1 offenbart ein Verfahren zur Handhabung einer Bearbeitungsmaschine mit redundanten Stellgliedern, wobei vorbestimmte Bewegungssequenzen zum Einsatz kommen. Gegengewichte sind dabei nicht vorgesehen.

Die DE102009039201 B3 offenbart für Mess- und Werkzeugmaschinen eine Impulsentkopplung im Zusammenhang mit der Überlagerung von langsamen und schnellen Bewegungsachsen.

Die DE102009039203A1 betrifft für Mess- und Werkzeugmaschinen eine Kompensation von Drehmomenten. Hier werden Störkräfte und Störmomente durch zusätzliche zwei Antriebe pro Achse ausgeglichen. Es werden also total vier Antriebe pro Freiheitsgrad benötigt, nämlich der erste für die Hauptachse, der zweite für die überlagerte Achse, der dritte und der vierte für den Ausgleich von Störkräften und Momenten. Diese Lösung ist konstruktiv, regelungs- und steuerungstechnisch mit extrem hohem Aufwand verbunden.

Die US7767932B2 offenbart eine Laserschneidmaschine mit polarem Antrieb, dem eine lineare Bewegungsachse überlagert ist. Die Laseraustrittsdüse ist entlang dieser Bewegungsachse linear bewegbar. Ein Drehantrieb wirkt dabei auf eine Spindel, an deren einem Arm der Laserkopf und an deren anderem Arm das Gegengewicht sitzt. Dieser Ansatz ist kompliziert, da der schwere Antrieb in der Mitte der Linearachse bzw. in der Drehachse des polaren Antriebes angeordnet ist.

Die nicht gattungsgemässe JP1193134A offenbart im Zusammenhang mit einem Gleittisch ("slide table") für ein Werkstück das Bewegen des Tisches und eines Gegengewichtes durch ein umlaufendes Zugmittel.

Die EP1312441A1 offenbart eine Werkzeugmaschine mit einem Spindelkopf, der entlang orthogonaler Führungen verschiebbar ist, und mit jeweils entgegengesetzt verschiebbaren Gegengewichten. Es handelt sich hierbei um eine serielle Kinematik.

Der sich aus dem Stand der Technik im Zusammenhang mit kartesischen Bewegungskinematiken für Strahlbearbeitungsvorrichtungen ergebende Nachteil besteht darin, dass Störkräfte entweder überhaupt nicht oder nur in unzureichendem Masse berücksichtigt werden. Weiter sind die bei diesen Lösungen vorgesehenen Kompensationsmechanismen derart aufwendig, dass zusätzliche Nachteile entstehen. Vor allem bei kartesischen Systemen, bei denen der Strahlbearbeitungskopf in einer Ebene in zwei zueinander orthogonale Richtungen verfahrbar ist, wirkt sich insbesondere das zusätzliche Gewicht der vorgesehenen Kompensationsmechanismen in Form zusätzlicher und gesondert angesteuerter Antriebe für die Gegenmassen nachteilig aus. Die Massnahmen für eine exakt aufeinander abgestimmte, synchronisierte Ansteuerung der Antriebe für den Strahlbearbeitungskopf einerseits und für die Gegenmassen andererseits sind ebenfalls kostspielig und fehleranfällig.

Aufgabe der vorliegenden Erfindung ist es somit, eine Strahlbearbeitungsvorrichtung bereitzustellen, mit der diese Nachteile beseitigt werden und mit der hochpräzise Werkstückbearbeitungen bei gleichzeitig hoher Dynamik durchführbar sind. Insbesondere sollen die durch Beschleunigung von Massen entstehenden Kräfte optimal kompensiert und in Folge mechanische Störungen wie Vibrationen verhindert werden. Die Lösung soll sich zudem durch einfache Konstruktion und kostengünstige Herstellbarkeit auszeichnen.

Die Aufgabe wird durch die Merkmale des unabhängigen Anspruchs gelöst. Vorteilhafte Weiterbildungen sind in den Figuren und in den abhängigen Patentansprüchen dargelegt.

Gemäss der Erfindung ist der erste Antrieb ausgebildet, um die erste Gegenmasse relativ zur ersten Plattform entlang der fünften Linearachse zu verfahren, wobei zwischen dem ersten Verschiebeelement und der ersten Gegenmasse ein erster mechanischer Kopplungsmechanismus geschaltet ist, der bei betätigtem ersten Antrieb ein Verfahren des ersten Verschiebeelementes (samt zweiter Plattform und Strahlbearbeitungskopf) und der ersten Gegenmasse in zueinander entgegengesetzte Richtungen bewirkt, und/oder der zweite Antrieb ist ausgebildet, um die zweite Gegenmasse relativ zur zweiten Plattform entlang der sechsten Linearachse zu verfahren, wobei zwischen dem zweiten Verschiebeelement und der zweiten Gegenmasse ein zweiter mechanischer Kopplungsmechanismus geschaltet ist, der bei betätigtem zweiten Antrieb ein Verfahren des zweiten Verschiebeelementes (samt zweiter Plattform und Strahlbearbeitungskopf) und der zweiten Gegenmasse in zueinander entgegengesetzte Richtungen bewirkt.

Derselbe Antrieb, der das jeweilige Verschiebeelement antreibt, bewirkt auch die Bewegung der dazugehörigen Gegenmasse in entgegengesetzte Richtung. Ein entsprechender mechanischer Kopplungsmechanismus sorgt dafür, dass das Verschiebeelement und die Gegenmasse gegensinnig (also zeitgleich in entgegengesetzte Richtungen bewegbar) synchronisiert sind. Eine derartige Synchronisierung ist weitaus zuverlässiger und weniger fehleranfällig und erlaubt eine hohe Dynamik. Des Weiteren wird durch die Erfindung das Gesamtgewicht und die Anzahl der Bauteile einer Strahlbearbeitungsvorrichtung im Hinblick auf den Stand der Technik erheblich reduziert, ohne Einbussen im Hinblick auf Präzision der Bearbeitung hinnehmen zu müssen.

Es handelt sich bei der Erfindung insbesondere um einen kartesischen Antrieb eines Strahlbearbeitungskopfes mit vorzugsweise parallelkinematischer Anbindung zwischen der ersten und der zweiten Plattform, wobei gleichzeitig und durch denselben Antrieb angetriebene Gegenmassen in entgegengesetzter Richtung zum Strahlbearbeitungskopf bzw. zum jeweiligen Verschiebeelement bewegt werden, um einen Massenausgleich zu erzielen. Durch die mechanische Kopplung von einer Werkzeugeinheit mit dem Schneidkopf und in Gegenrichtung bewegten Gegenmassen können die Störkräfte minimiert werden.

Bevorzugt ist der erste Antrieb und/oder der zweite Antrieb ein Drehantrieb, vorzugsweise ein Torquemotor. Dies stellt eine zuverlässige und leicht in bestehende Konstruktionen einzubindende Lösung dar.

Alternativ dazu ist der erste Antrieb und/oder der zweite Antrieb ein Linearantrieb. Linearantriebe ermöglichen, dass diese nicht nur auf der ersten Plattform angeordnet werden können, sondern auch auf anderen beweglichen Komponenten, wie auf einem Verschiebeelement oder auf einer Gegenmasse. Solche Antriebe können selbst als Gegenmasse oder als Teil der Gegenmasse dienen und in die Konstruktion eingebunden werden. Des Weiteren zeichnen sich solche Antriebe durch ihre platzsparende Bauweise aus.

Bevorzugt ist der erste Antrieb auf der ersten Plattform und/oder ist der zweite Antrieb auf der ersten Plattform angeordnet. Hier sind die Antriebe im Hinblick auf die erste Plattform stationär und stellen zusammen mit den Verschiebeelementen einen parallelkinematischen Antrieb dar.

Bevorzugt bildet zumindest ein Teil des ersten Antriebes zumindest einen Teil der ersten Gegenmasse und/oder bildet zumindest ein Teil des zweiten Antriebes zumindest einen Teil der zweiten Gegenmasse. Bei dieser Ausführungsform wird das Gesamtgewicht der Strahlbearbeitungsvorrichtung weiter reduziert, da der jeweilige Antrieb nicht nur die Funktion des Antreibens von Verschiebeelement und Gegenmasse ausübt, sondern gleichzeitig zumindest einen Teil der Gegenmasse bildet. Der Antrieb ist demnach als Gegenmasse oder als Teil der Gegenmasse relativ zur ersten Plattform verschiebbar (entlang der fünften bzw. sechsten Linearachse). Der Antrieb wirkt mit der ersten Plattform insofern zusammen, als der Antrieb über ein angetriebenes Aktuatorende (z.B. ein drehbares Ritzel) mit einer Struktur der ersten Plattform zusammenwirkt bzw. an einer Struktur der ersten Plattform angreift. Diese Struktur kann z.B. eine Zahnstange sein, in die ein Ritzel des Antriebes eingreift.

Bevorzugt ist der erste Antrieb ein elektromagnetischer Linearantrieb mit einem bestrombaren Primärteil und einem mit dem Primärteil elektromagnetisch zusammenwirkenden Sekundärteil, wobei vorzugsweise der Primärteil des ersten Antriebes an der ersten Plattform befestigt ist und der Sekundärteil des ersten Antriebes zumindest einen Teil der ersten Gegenmasse bildet,
und/oder ist der zweite Antrieb ein elektromagnetischer Linearantrieb mit einem bestrombaren Primärteil und einem mit dem Primärteil elektromagnetisch zusammenwirkenden Sekundärteil, wobei vorzugsweise der Primärteil des zweiten Antriebes an der ersten Plattform befestigt ist und der Sekundärteil des zweiten Antriebes zumindest einen Teil der zweiten Gegenmasse bildet.

Bei dieser Ausführungsform handelt es sich um einen Linearantrieb mit elektromagnetischer Kraftübertragung über einen Luftspalt. Einer der beiden Teile, vorzugsweise der Sekundärteil kann der Gegenmasse zugeordnet werden.

Der Sekundärteil besteht aus einem Stator aus Permanentmagneten und ist vorzugsweise U-förmig ausgebildet. Der bestrombare Primärteil ragt in den Sekundärteil hinein.

Derartige Linearmotoren sind z.B. als Baureihe LMC von der Firma HIWIN GmbH erhältlich und sind leicht und dynamisch. Ausführungen mit einem eisenlosen Primärteil (Forcer) mit epoxid-vergossenen Spulen sind hier bevorzugt.

Der Primärteil des Antriebs, an dem auch das Kabel angemacht ist bzw. der bestromt wird, entspricht dem leichteren Teil und ist an der ersten Plattform befestigt. Dies hat auch den Vorteil, dass nur der Sekundärteil, der keine Zuleitung aufweist, vom Primärteil dynamisch bewegt werden muss.

Es wird somit der Sekundärteil des Antriebs samt Massstab bewegt, während der Primärteil samt Lesekopf nicht bewegt bzw. mit der ersten Plattform verbunden ist. Dies hat den Vorteil, dass die Signal- und Leistungskabel nicht dynamisch bewegt werden müssen relativ zur ersten Plattform. Eine derartige Lösung ist einfach, ausfallsicher, platzsparend, günstiger und erfordert keinen Kabelschlepp.

Bevorzugt wirkt der erste Antrieb direkt auf den ersten Kopplungsmechanismus ein, der die Bewegung des Antriebes auf das erste Verschiebeelement und die erste Gegenmasse überträgt, und/oder der zweite Antrieb wirkt direkt auf den zweiten Kopplungsmechanismus ein, der die Bewegung des zweiten Antriebes auf das zweite Verschiebeelement und die zweite Gegenmasse überträgt. Der jeweilige Kopplungsmechanismus verzweigt den beim Antrieb beginnenden mechanischen Antriebsstrang vorzugsweise symmetrisch (aber gegensinnig) in einen sich zur Gegenmasse erstreckenden Zweig und in einen sich zum Verschiebeelement erstreckenden Zweig.

Die Gegenmasse muss prinzipiell nicht gleich gross sein wie jene vom Verschiebeelement mit Strahlbearbeitungskopf und der zweiten Plattform. Mit einer Kopplung, die z.B. das Verschiebeelement halb so weit bewegt wie eine halb so schwere Gegenmasse, könnte ebenfalls einen Massenausgleich erreicht werden. Eine derartige Variante besitzt Vorteile aufgrund der reduzierten Gesamtmasse des Systems.

Bevorzugt wirkt der erste Antrieb direkt auf das erste Verschiebeelement ein, das die Bewegung über den ersten Kopplungsmechanismus auf die erste Gegenmasse überträgt, und/oder der zweite Antrieb wirkt direkt auf das zweite Verschiebeelement ein, das die Bewegung über den zweiten Kopplungsmechanismus auf die zweite Gegenmasse überträgt. In diesem Fall kann die Strahlbearbeitungsvorrichtung auch dann verwendet werden, wenn Gegenmasse und/oder Kopplungsmechanismus, z.B. zu Wartungszwecken, vorübergehend ausgebaut sind.

Bevorzugt wird der erste Kopplungsmechanismus aus zumindest einem Ritzel und zwei mit dem Ritzel zusammenwirkenden Zahnstangen, die sich bei einer Drehung des Ritzels in entgegengesetzte Richtungen bewegen, gebildet, wobei eine der Zahnstangen am ersten Verschiebeelement und die andere Zahnstange an der ersten Gegenmasse ausgebildet ist, und/oder der zweite Kopplungsmechanismus wird aus zumindest einem Ritzel und zwei mit dem Ritzel zusammenwirkenden Zahnstangen gebildet, die sich bei einer Drehung des Ritzels in entgegengesetzte Richtungen bewegen, wobei eine der Zahnstangen am zweiten Verschiebeelement und die andere Zahnstange an der zweiten Gegenmasse ausgebildet ist. Dies erlaubt eine besonders einfache, zuverlässige, spielfreie und wartungsarme Kopplung zwischen Verschiebeelement und Gegenmasse.

Besonders geeignet zur Verwirklichung dieser Ausführungsform ist ein Drehantrieb. Ein Drehantrieb (z.B. Torquemotor) treibt ein Ritzel an mit dem zwei mit Verzahnung versehene Linearführungen (z.B. Zahnstangen) in entgegengesetzter Richtung bewegt werden. Die eine Linearführung bewegt über eine mechanische Verbindung einen Strahlbearbeitungskopf (z.B. Laserschneidkopf) in die gleiche Richtung. Auf der in die Gegenrichtung bewegten Zahnstange ist die Gegenmasse befestigt. Somit entstehen keine resultierenden Störkräfte auf die erste Plattform in Antriebsrichtung.

Die mechanische Kopplung ist mit einer kommerziell erhältlichen Einheit mit Ritzel und doppelter, verzahnter Linearführung aber auch mit anderen mechanischen Kopplungen, wie Riemen oder Seilzug, denkbar.

Statt einem Drehantrieb kann das Prinzip auch mit einem Linearantrieb gelöst werden. Der Linearantrieb bildet hier zumindest einen Teil der Gegenmasse aus und ist wie oben definiert bezüglich der ersten Plattform verschiebbar. Hier kann die translatorisch bewegte Masse des Antriebs als Gegenmasse benutzt werden, indem der Strahlbearbeitungskopf (Schneidkopf) in Gegenrichtung bewegt wird. Dies kann beispielsweise mit einem oben beschriebenen Kopplungsmechanismus (Ritzel - Zahnstangen) gelöst werden.

Bevorzugt sind die Zahnstangen an gegenüberliegenden Seiten des Ritzels angeordnet und greifen in das Ritzel ein. Bei dieser Ausführungsform kann die Anzahl der Teile niedrig gehalten werden, was sich vorteilhaft auf das Gesamtgewicht auswirkt.

Bevorzugt ist die Drehachse des Ritzels ortsfest zur ersten Plattform. Dies erlaubt eine stabile Konstruktion.

Bevorzugt ist der Antrieb ein Drehantrieb, dessen Drehachse mit der Drehachse des Ritzels zusammenfällt. Diese Lösung ist besonders platzsparend und spielfrei.

Bevorzugt wird der erste Kopplungsmechanismus aus einem umlaufenden Zugmittel, insbesondere einem Riemen, einem Band, einem Seil oder einer Kette, gebildet, das in seinem Verlauf zwei, sich bei einer Bewegung des Zugmittels in entgegengesetzte Richtungen bewegende Abschnitte aufweist, wobei das erste Verschiebeelement an einem der beiden Abschnitte des Zugmittels angebunden ist und die erste Gegenmasse am anderen Abschnitt des Zugmittels angebunden ist, und/oder der zweite Kopplungsmechanismus wird aus einem umlaufenden Zugmittel, insbesondere einem Riemen, einem Band, einem Seil oder einer Kette, gebildet, das in seinem Verlauf zwei, sich bei einer Bewegung des Zugmittels in entgegengesetzte Richtungen bewegende Abschnitte aufweist, wobei das zweite Verschiebeelement an einem der beiden Abschnitte des Zugmittels angebunden ist und die zweite Gegenmasse am anderen Abschnitt des Zugmittels angebunden ist. Dies erlaubt eine an die jeweiligen Gegebenheiten besonders gut anpassbare Konstruktion. Aufgrund der Flexibilität des Zugmittels kann sein Verlauf, sowie die Anordnung von Gegengewichten relativ zu den Verschiebeelementen je nach Anforderungen gewählt werden. Z.B. erlaubt diese Lösung, dass Verschiebeelemente weiter voneinander distanziert angeordnet werden können, ohne die Qualität der Bewegungskopplung einzuschränken. Zum Umlenken des Zugmittels und zur Ausbildung zweier gegenläufiger Abschnitte können Umlenkmittel, insbesondere Umlenkrollen, vorgesehen sein.

Zugmittel, insbesondere in Form von Riemen, können somit ebenfalls als mechanische Kopplungen benutzt werden. Es sind Varianten mit unterschiedlichen Antrieben denkbar, z.B. Drehmotoren oder Linearantrieben. Bei der Variante mit Linearantrieben, die wie oben beschrieben als Gegenmasse wirken, kann bei Bedarf mit zusätzlichen Massen ein besonders genauer Massenausgleich erreicht werden.

Bevorzugt wird der erste Kopplungsmechanismus aus einer drehbaren Gewindespindel, insbesondere einer Kugelgewindespindel, mit zwei, zueinander gegensinnigen Gewindesteigung aufweisenden Abschnitten gebildet, wobei das erste Verschiebeelement an einem der beiden Abschnitte der Gewindespindel angebunden ist und die erste Gegenmasse am anderen Abschnitt der Gewindespindel angebunden ist, und/oder der zweite Kopplungsmechanismus wird aus einer drehbaren Gewindespindel, insbesondere einer Kugelgewindespindel, mit zwei, zueinander gegensinnige Gewindesteigung aufweisenden Abschnitten gebildet, wobei das zweite Verschiebeelement an einem der beiden Abschnitte der Gewindespindel angebunden ist und die zweite Gegenmasse am anderen Abschnitt der Gewindespindel angebunden ist. Dies stellt eine besonders elegante Lösung dar, da hier die erste und die fünfte Linearachse zusammenfallen sowie die zweite und die sechste Linearachse zusammenfallen. Neben einer optimalen Kopplung ergibt dies auch bei starken Beschleunigungen einen hervorragenden Massenausgleich.

Diese Ausführungsform ist bevorzugt mit einem Drehantrieb realisierbar. Durch Drehen der Spindel mit Rechts- und Linksgewinde können zwei Gegenstände (Verschiebeelement und Gegenmasse) in entgegengesetzte Richtungen bewegt werden. Dies kann benutzt werden, um den Schneidkopf und die Gegenmasse ausgeglichen anzutreiben.

Bevorzugt wird die Gewindespindel an einem Ende von einem Drehantrieb gehalten und angetrieben, während das andere Ende der Gewindespindel ein freies Ende ist. Der Kopplungsmechanismus wird somit vom Antrieb gehalten, der stationär mit der ersten Plattform verbunden ist. Neben dem Antreiben übernimmt der Antrieb im vorliegenden Fall eine Haltefunktion. Vorzugsweise ist die Gegenmasse auf der Gewindespindel zwischen dem Antrieb (Drehantrieb) und dem Verschiebeelement angeordnet bzw. angebunden, wodurch eine bestmögliche Raumnutzung gewährleistet ist. Besonders bevorzugt ist die Gewindespindel eine durchgehende Spindel, was den konstruktiven Aufwand minimiert.

Bevorzugt ist die erste, zweite, dritte, vierte, fünfte und/oder sechste Linearachse in Form einer Linearführung, insbesondere einer Schiene, verwirklicht. Dadurch werden die Freiheitsgrade des Strahlbearbeitungskopfes exakt und im Wesentlichen spielfrei definiert.

Bevorzugt bilden die erste Plattform, die zweite Plattform, das erste und zweite Verschiebeelement und der erste und zweite Antrieb zusammen eine Parallelkinematik, wodurch eine hohe Dynamik erreichbar ist.

Bevorzugt ist die erste Plattform auf einem Träger ausgebildet, der in einer Ebene verfahrbar ist, vorzugsweise entlang einer ersten linearen Verschiebeachse und entlang einer zweiten linearen Verschiebeachse, wobei die linearen Verschiebeachsen vorzugsweise orthogonal zueinander stehen. Unterhalb des Trägers ist die Werkstückauflage angeordnet, um ein insbesondere flächiges bzw. plattenförmiges Werkstück unterhalb des Strahlbearbeitungskopfes anzuordnen.

Die Erfindung ist nicht auf oben beschriebene Beispiele beschränkt, sondern erlaubt eine Vielzahl von Weiterentwicklungen. So kann z.B. eine Integration einer Z-Achse quer zur Bewegungsrichtung, d.h. senkrecht zur ersten bis sechsten Linearachse, vorgesehen sein, sodass der Strahlbearbeitungskopf relativ zur ersten Plattform entlang der Z-Achse (vertikal) verfahren werden kann. Alternativ kann die erste Plattform samt der daran hängenden zweiten Plattform in der Strahlbearbeitungsvorrichtung entlang einer Z-Achse (vertikal) verfahrbar sein.

Dieses Verfahren kann auch dynamisch sein, falls nur der Strahlbearbeitungskopf bewegt werden muss.

Die Gegenmassen können so angeordnet werden, dass nicht nur die translatorischen Kräfte vermieden werden, sondern auch resultierende Momente.

Verschiedene Versuche haben gezeigt, dass redundante Systeme mit kartesischem Aufbau ohne Massenausgleich nicht genügend genau geregelt werden können, ohne Berücksichtigung der Störkräfte der schnellen Achsen.

In diesem Zusammenhang bildet die Erfindung eine hochdynamische kartesische Bewegungseinheit zum (Laser)Strahlbearbeiten bzw. -schneiden mit zwei (parallelen) Antrieben und minimalen Reaktionskräften von Beschleunigungskräften auf die Halterung der Bewegungseinheit.

Durch die geeignete Anordnung der Antriebe und Ankopplung der Gegenmassen gemäss der Erfindung können diese störenden Reaktionskräfte minimiert werden.

Die erste Plattform wiederum kann an die längeren und weniger dynamischen Achsen X-Y-Z aufgehängt sein. Eine Vielzahl an Einsatzmöglichkeiten kommt dadurch zustande.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1: eine erste Ausführungsform einer erfindungsgemässen Strahlbearbeitungsvorrichtung mit Drehantrieb und Zahnstangen,
- Fig. 2: die Strahlbearbeitungsvorrichtung aus Fig. 1 mit aufgeschnittenem ersten Antrieb und Kopplungsmechanismus,
- Fig. 3: die Strahlbearbeitungsvorrichtung aus Fig. 1 in Draufsicht,
- Fig. 4: in perspektivischer Ansicht eine zweite Ausführungsform der Erfindung mit Drehantrieb und Gewindespindel,
- Fig. 5: die Ausführungsform aus Fig. 4 in Draufsicht,
- Fig. 6: in perspektivischer Ansicht eine dritte Ausführungsform der Erfindung mit Linearantrieb und Zahnstangen,
- Fig. 7: die Ausführungsform aus Fig. 6 in Draufsicht,
- Fig. 8: die Ausführungsform aus Fig. 6 in Seitenansicht,
- Fig. 9: in perspektivischer Ansicht eine vierte Ausführungsform der Erfindung mit Drehantrieb und Zugmittel,
- Fig. 10: in perspektivischer Ansicht eine weitere Ausführungsform der Erfindung mit Linearantrieb und Zugmittel,
- Fig. 11: die Ausführungsform aus Fig. 10 in Seitenansicht,
- Fig. 12: die Ausführungsform aus Fig. 10 in einer weiteren Seitenansicht, und
- Fig. 13: schematisch ein Beispiel einer Strahlbearbeitungsvorrichtung.

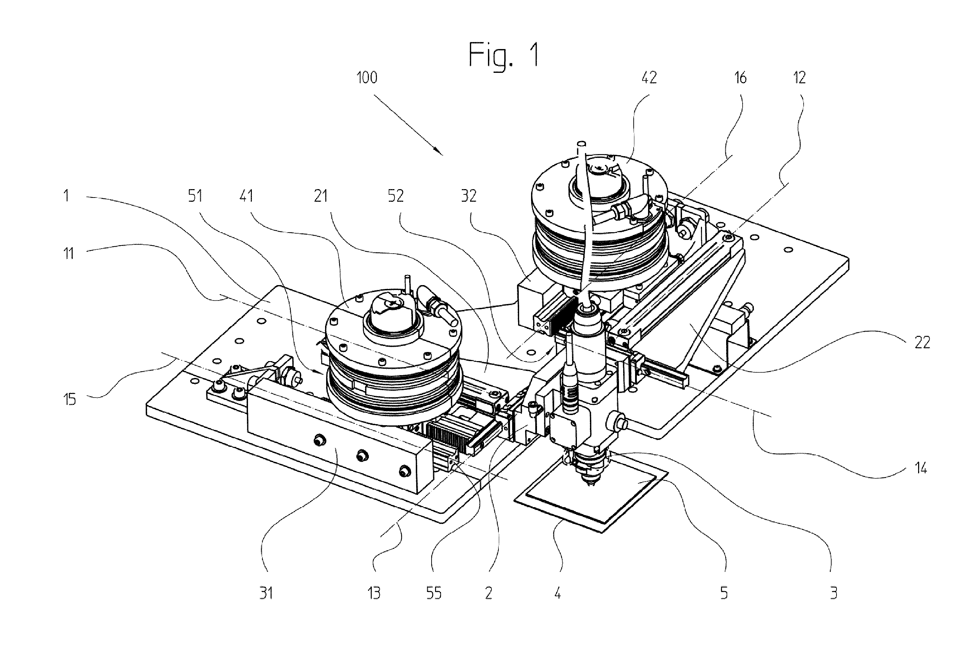

Die Fig. 1, 2 und 3 zeigen eine erste Ausführungsform einer Strahlbearbeitungsvorrichtung 100 mit einer ersten Plattform 1, mit einer an der ersten Plattform 1 beweglich gelagerten zweiten Plattform 2 und mit einem von der zweiten Plattform 2 gehaltenen Strahlbearbeitungskopf 3 zur Bearbeitung eines auf einer Werkstückauflage 4 gehaltenen Werkstückes 5 mit einem Strahl, insbesondere einem Laserstrahl oder Wasserstrahl. Die Strahlbearbeitungsvorrichtung 100 ist z.B. eine Schneidvorrichtung zum Schneiden von flächigen Werkstücken, insbesondere metallischen Blechen (z.B. Stahlblechen).

Die zweite Plattform 2 ist mit der ersten Plattform 1 über ein erstes Verschiebeelement 21 und ein zweites Verschiebeelement 22 verbunden, wobei das erste Verschiebeelement 21 an der ersten Plattform 1 entlang einer ersten Linearachse 11 verschiebbar gelagert ist und das zweite Verschiebeelement 22 an der ersten Plattform 1 entlang einer zweiten Linearachse 12 verschiebbar gelagert ist. Die erste Linearachse 11 und die zweite Linearachse 12 sind zueinander geneigt, im vorliegenden Fall um 90°, wodurch sich ein kartesisches Bewegungssystem ergibt.

Die zweite Plattform 2 ist am ersten Verschiebeelement 21 entlang einer dritten Linearachse 13 verschiebbar gelagert und am zweiten Verschiebeelement 22 entlang einer vierten Linearachse 14 verschiebbar gelagert. Die erste Linearachse 11 und die vierte Linearachse 14 stehen dabei im Wesentlichen parallel zueinander und die zweite Linearachse 12 und die dritte Linearachse 13 stehen ebenfalls im Wesentlichen parallel zueinander. Ein Verfahren des ersten Verschiebeelementes 21 relativ zur ersten Plattform 1 entlang der Linearachse 11 bewirkt somit ein Verfahren der zweiten Plattform 2 relativ zum zweiten Verschiebeelement 22 entlang der Linearachse 14. Analog gilt dies auch im Hinblick auf die Linearachsen 12 und 13.

Die in Fig. 1 gezeigte Anordnung umfasst weiter einen ersten Antrieb 41, der mit dem ersten Verschiebeelement 21 zusammenwirkt, um das erste Verschiebeelement 21 relativ zur ersten Plattform 1 entlang der ersten Linearachse 11 zu verfahren, und einen zweiten Antrieb 42, der mit dem zweiten Verschiebeelement 22 zusammenwirkt, um das zweite Verschiebeelement 22 relativ zur ersten Plattform 1 entlang der zweiten Linearachse 12 zu verfahren.

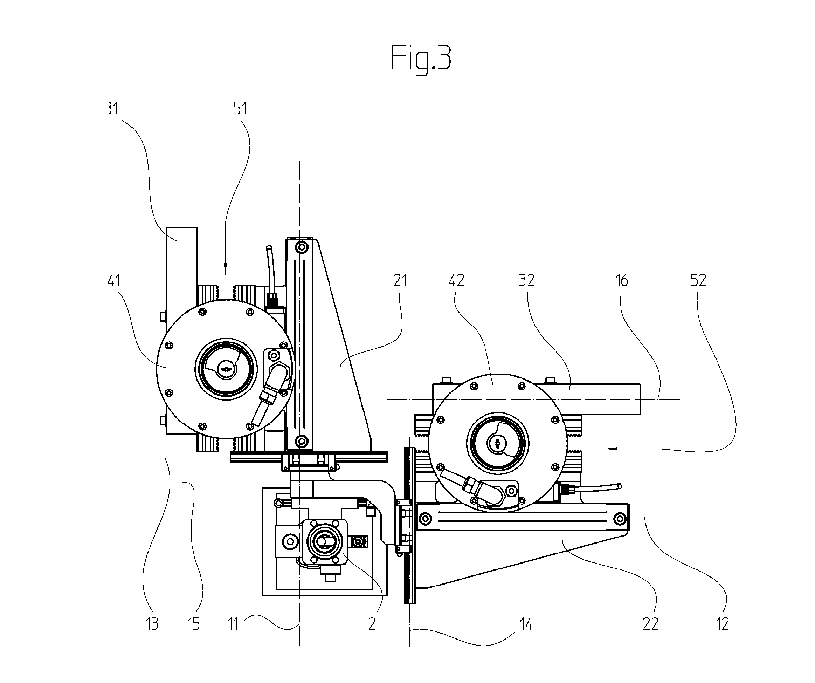

Eine erste Gegenmasse 31 ist relativ zur ersten Plattform 1 entlang einer fünften Linearachse 15 verschiebbar gelagert und eine zweiten Gegenmasse 32 ist relativ zur ersten Plattform 1 entlang einer sechsten Linearachse 16 verschiebbar gelagert. Dabei verlaufen bzw. stehen die erste Linearachse 11 und die fünfte Linearachse 15 im Wesentlichen parallel zueinander und die zweite Linearachse 12 und die sechste Linearachse 16 verlaufen bzw. stehen im Wesentlichen parallel zueinander. Der Verlauf der Linearachsen ist insbesondere in der Draufsicht der Fig. 3 ersichtlich. Die erste, zweite, dritte, vierte, fünfte und/oder sechste Linearachse 11, 12, 13, 14, 15, 16 können in Form einer Linearführung, insbesondere einer Schiene, verwirklicht sein.

Der erste Antrieb 41, der das erste Verschiebeelement 21 relativ zur ersten Plattform 1 antriebt, wirkt auch mit der ersten Gegenmasse 31 zusammen, um die erste Gegenmasse 31 relativ zur ersten Plattform 1 entlang der fünften Linearachse 15 zu verfahren. Zwischen dem ersten Verschiebeelement 21 und der ersten Gegenmasse 31 ist dabei ein erster mechanischer Kopplungsmechanismus 51 geschaltet, der bei betätigtem ersten Antrieb 41 ein gleichzeitiges Verfahren des ersten Verschiebeelementes 21 und der ersten Gegenmasse 31 in zueinander entgegengesetzte Richtungen bewirkt.

Der zweite Antrieb 42, der das zweite Verschiebeelement 22 relativ zur ersten Plattform 1 antreibt, wirkt auch mit der zweiten Gegenmasse 32 zusammen, um die zweite Gegenmasse 32 relativ zur ersten Plattform 1 entlang der sechsten Linearachse 16 zu verfahren. Zwischen dem zweiten Verschiebeelement 22 und der zweiten Gegenmasse 32 ist dabei ein zweiter mechanischer Kopplungsmechanismus 52 geschaltet, der bei betätigtem zweiten Antrieb 42 ein gleichzeitiges Verfahren des zweiten Verschiebeelementes 22 und der zweiten Gegenmasse 32 in zueinander entgegengesetzte Richtungen bewirkt.

Die Antriebe 41, 42 sind Drehantriebe, z.B. Torquemotoren. Beide Antriebe 41, 42 sitzen auf der ersten Plattform 1, d.h. die Drehachsen der Drehantriebe sind stationär bezüglich der ersten Plattform 1. Die erste Plattform 1, die zweite Plattform 2, das erste und zweite Verschiebeelement 21, 22 und der erste und zweite Antrieb 41, 42 bilden zusammen eine Parallelkinematik.

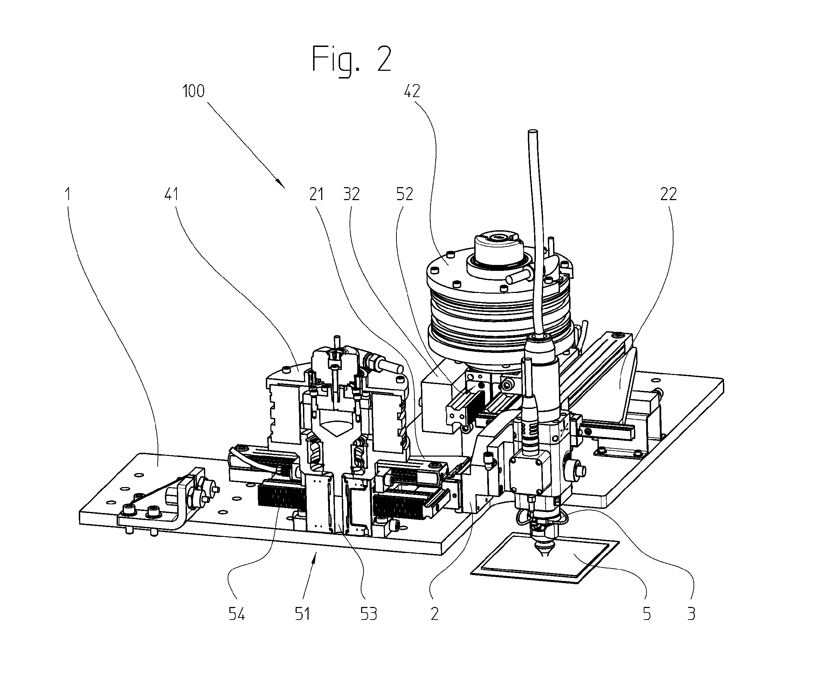

Im Folgenden wird das Zusammenwirken des Antriebes mit den beweglichen Teilen der Bewegungseinheit anhand der Fig. 2, die einen teilweise aufgeschnittenen Antrieb/Kopplungsmechanismus zeigt, näher beschrieben:

Der erste Antrieb 41 ist mit dem ersten Kopplungsmechanismus 51 verbunden und wirkt direkt auf diesen ein. Der Kopplungsmechanismus 51 überträgt die Bewegung des Antriebes 41 auf das erste Verschiebeelement 21 und die erste Gegenmasse 31. Ebenso wirkt der zweite Antrieb 42 direkt auf den zweiten Kopplungsmechanismus 52 ein, der dann die Bewegung des zweiten Antriebes 42 auf das zweite Verschiebeelement 22 und die zweite Gegenmasse 32 überträgt.

Im dargestellten Ausführungsbeispiel wird der erste Kopplungsmechanismus 51 aus zumindest einem Ritzel 53 und zwei mit dem Ritzel 53 zusammenwirkenden Zahnstangen 54, 55, die sich bei einer Drehung des Ritzels 53 in entgegengesetzte Richtungen bewegen, gebildet.

Dabei ist eine der Zahnstangen 54 am ersten Verschiebeelement 21 und die andere Zahnstange 55 an der ersten Gegenmasse 31 ausgebildet bzw. vorgesehen.

Der zweite Kopplungsmechanismus 52 ist im dargestellten Beispiel analog zum ersten Kopplungsmechanismus 51 aufgebaut.

Bevorzugt ist es, wenn die Zahnstangen 54, 55 wie im dargestellten Beispiel an gegenüberliegenden Seiten des Ritzels 53 angeordnet sind und in das Ritzel 53 eingreifen, wodurch sich eine gegensinnige Bewegung von Verschiebeelement 21, 22 und dazugehöriger Gegenmasse 31, 32 ergibt.

Das jeweilige Ritzel 53 ist dabei derart angeordnet, dass seine Drehachse mit der Drehachse des entsprechenden Antriebes 41 bzw. 42 zusammenfällt und somit ebenfalls ortsfest zur ersten Plattform 1 ist.

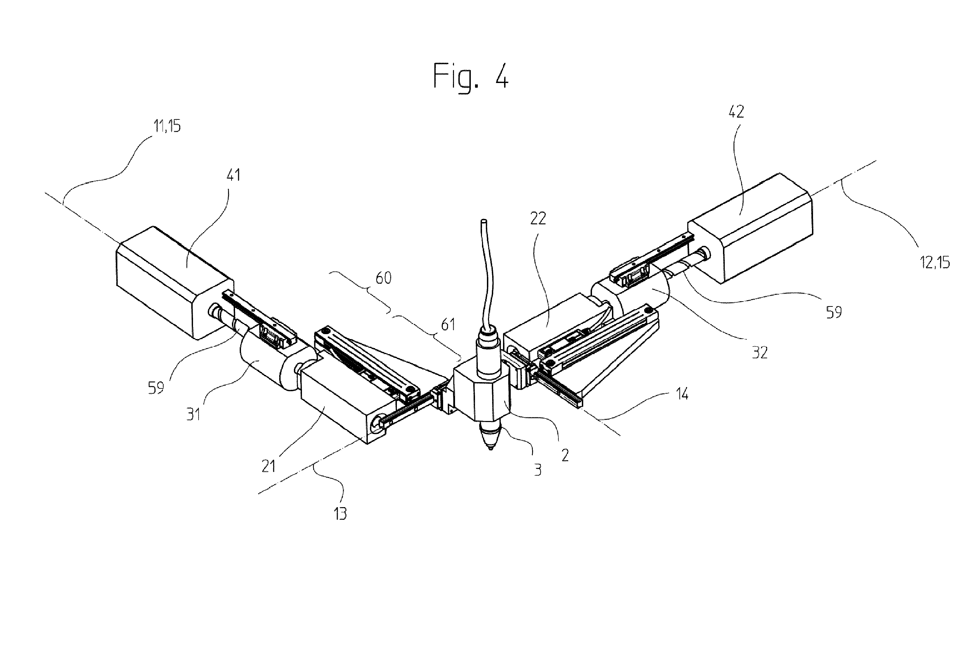

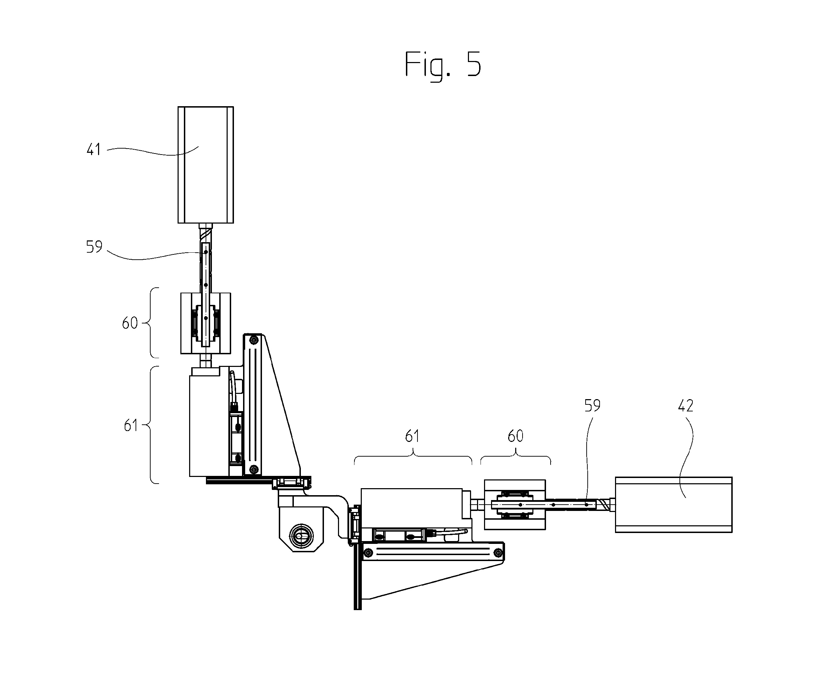

Die Figuren 4 und 5 zeigen eine zweite Ausführungsform der Erfindung. Da das anhand der Figuren 1 bis 3 beschriebene Grundprinzip, insbesondere der Verlauf der Linearachsen, auch bei der Ausführungsform der Figuren 4 und 5 dasselbe ist, wird, um Redundanzen zu vermeiden, auf eine neuerliche Erläuterung verzichtet.

Bei der zweiten Ausführungsform wird der erste Kopplungsmechanismus 51 durch eine drehbare Gewindespindel 59, insbesondere einer Kugelgewindespindel, gebildet. Die Gewindespindel 59 weist zwei Abschnitte 60, 61 auf, die gegensinnige Gewindesteigungen aufweisen. Dabei ist das erste Verschiebeelement 21 an einem der beiden Abschnitte 61 der Gewindespindel 59 über eine Gewindemutter (nicht dargestellt), insbesondere eine Kugelgewindemutter, angebunden. Die erste Gegenmasse 31 ist am anderen, eine gegenläufige Gewindesteigung aufweisendem Abschnitt 60 der Gewindespindel 59 über eine Gewindemutter (nicht dargestellt), insbesondere eine Kugelgewindemutter, angebunden.

Eine Drehung der Gewindespindel 59 um ihre Längsachse bewirkt nun, dass sich das erste Verschiebeelement 21 und die erste Gegenmasse 31 in zueinander entgegengesetzte Richtung bzw. relativ voneinander weg bewegen, wodurch ein Massenausgleich stattfindet. Die erste und fünfte Linearachse 11, 15 können bei dieser Ausführungsform zusammenfallen, ebenso die zweite und die sechste Linearachse 12, 16.

Die Gewindespindel 59 wird an einem Ende vom ersten Antrieb 41, der ein Drehantrieb ist, gehalten und angetrieben, während das andere Ende der Gewindespindel 59 ein freies Ende ist.

Der zweite Kopplungsmechanismus 52 ist im dargestellten Beispiel analog zum ersten Kopplungsmechanismus 51 ausgebildet.

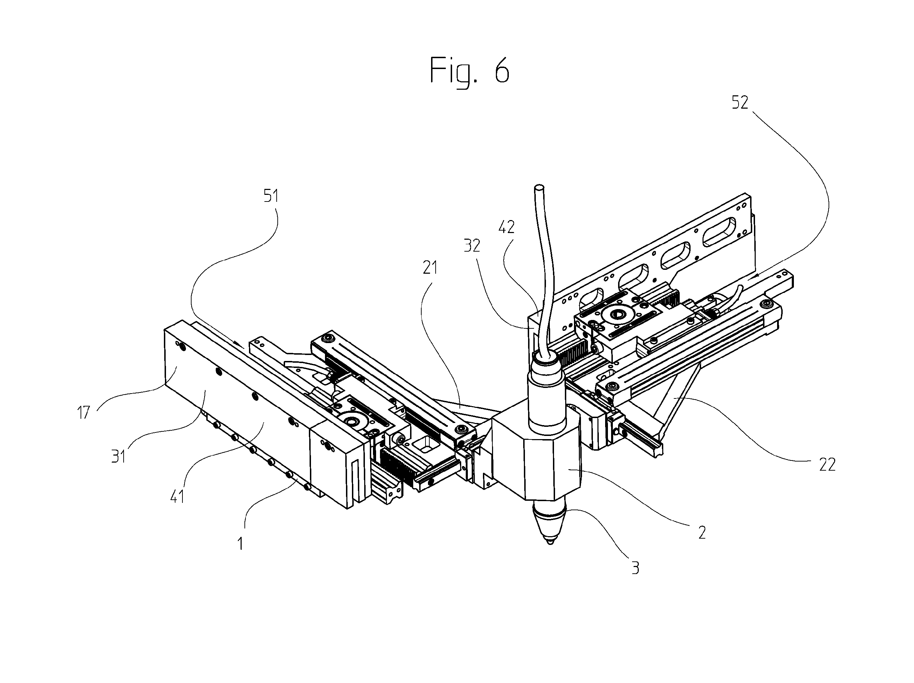

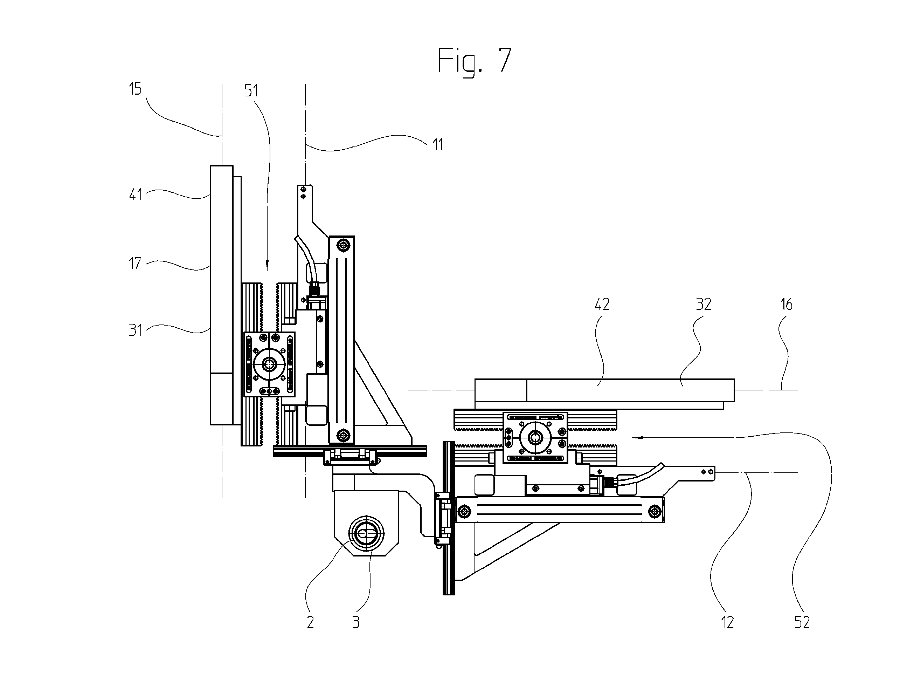

Die Figuren 6, 7 und 8 zeigen jeweils in perspektivischer Ansicht, in Draufsicht und in Seitenansicht eine dritte Ausführungsform der Erfindung. Wieder wird auch hier auf eine neuerliche Erläuterung des Grundprinzips verzichtet und nur auf die Besonderheiten dieser Ausführungsform näher eingegangen.

Der erste Antrieb 41 und der zweite Antrieb 42 sind jeweils als Linearantrieb ausgebildet, d.h. die von ihnen ausgehende Bewegung ist eine translatorische Bewegung. Im Gegensatz zur ersten Ausführungsform (Figuren 1 bis 3) sitzt zumindest ein Teil der Antriebe 41, 42 nicht auf der ersten Plattform 1, sondern bilden jeweils die erste und zweite Gegenmasse 31, 32 oder zumindest einen Teil der entsprechenden Gegenmassen. Dieses Prinzip wird anhand des ersten Antriebes 41 erläutert und ist analog auf den zweiten Antrieb 42 übertragbar.

Ein Teil des ersten Antriebes 41 ist relativ zur ersten Plattform 1 entlang der fünften Linearachse 15 verschiebbar. Der erste Antrieb 41 dient nicht nur zum Antreiben von dem ersten Verschiebeelement 21 und der ersten Gegenmasse 31, sondern bildet gleichzeitig einen Teil der ersten Gegenmasse 31 oder gar die gesamte erste Gegenmasse 31. Ein Teil des ersten Antriebes 41 ist also als Gegenmasse oder als Teil der Gegenmasse relativ zur ersten Plattform 1 verschiebbar (entlang der fünften Linearachse). Der erste Antrieb 41 wirkt mit der ersten Plattform 1 insofern zusammen, als ein Teil des ersten Antriebes 41 (z.B. über einen Primärteil, ein Aktuatorende, ein drehbares Ritzel, etc.) mit einer Struktur der ersten Plattform 1 zusammenwirkt bzw. an einer Struktur der ersten Plattform 1 angreift oder an der ersten Plattform 1 befestigt ist.

Im dargestellten Ausführungsbeispiel ist der erste Antrieb 41 ein elektromagnetischer Linearantrieb mit einem bestrombaren Primärteil 6 und einem mit dem Primärteil 6 elektromagnetisch (über einen Luftspalt) zusammenwirkenden Sekundärteil 17. Der Primärteil 6 ist an der ersten Plattform 1 befestigt und der Sekundärteil 17 bildet die erste Gegenmasse 31.

Der Sekundärteil 17 besteht aus einem länglichen, U-förmigen Querschnitt aufweisenden Stator, der vorzugsweise Permanentmagneten enthält. In den U-förmigen Querschnitt ragt der bestrombare Primärteil 6, der Primärspulen enthält.

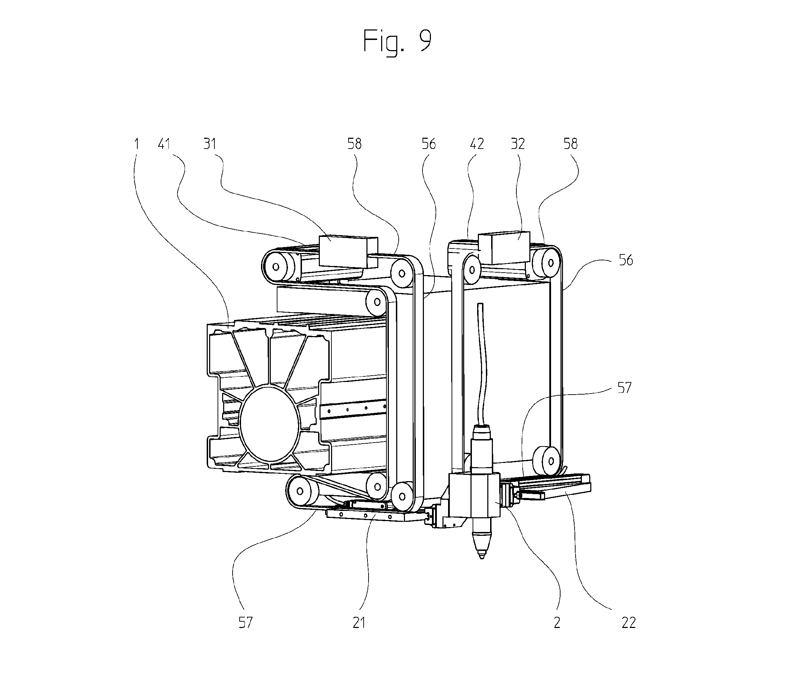

Fig. 9 zeigt eine vierte Ausführungsform, bei deren Erläuterung wiederum das oben beschriebene erfindungsgemässe Grundprinzip vorausgesetzt wird.

Der erste Kopplungsmechanismus 51 wird aus einem umlaufenden Zugmittel 56, insbesondere einem Riemen, einem Band, einem Seil oder einer Kette, gebildet, das in seinem Verlauf zwei Abschnitte 57, 58 aufweist, die sich bei einer Bewegung des Zugmittels 56 in entgegengesetzte Richtungen bewegen. Diese wird durch entsprechend angeordnete Umlenkrollen erreicht, an denen das Zugmittel einen Richtungswechsel erfährt.

Das erste Verschiebeelement 21 ist an einem der beiden Abschnitte 57 des Zugmittels 56 angebunden und die erste Gegenmasse 31 ist am anderen (gegensinnig bewegten) Abschnitt 58 des Zugmittels 56 angebunden.

Der zweite Kopplungsmechanismus 52 ist im Wesentlichen analog zum ersten Kopplungsmechanismus 51 ausgebildet mit dem Unterschied, dass der erste Kopplungsmechanismus 51 derart ausgebildet ist, dass er einen Träger der ersten Plattform 1 von drei Seiten umschliesst. Der grosse Vorteil dieser Ausführungsform besteht somit darin, dass der Kopplungsmechanismus aufgrund der Flexibilität und Umlenkbarkeit des Zugmittels 56 durch Umlenkmittel (wie z.B. die in Fig. 9 dargestellten Umlenkrollen) einfach an die Grundkonstruktion angepasst werden kann, wodurch sich sehr platzsparende Anordnungen ergeben.

In Fig. 9 sind die Antriebe 41, 42 Drehantriebe, die jeweils an einer Umlenkrolle angreifen bzw. deren jeweilige Drehachse mit der Drehachse der jeweiligen Umlenkrolle zusammenfällt.

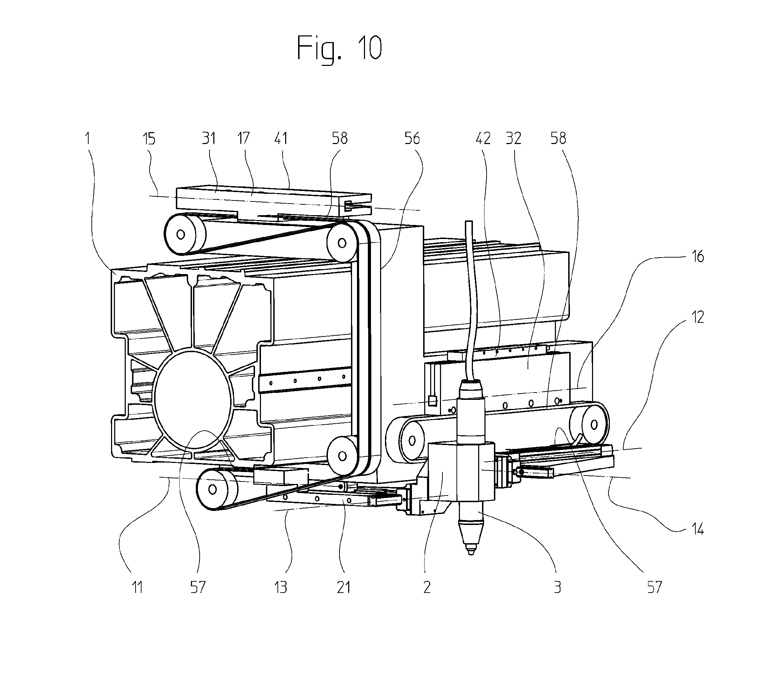

Die Figuren 10, 11 und 12 zeigen in perspektivischer Ansicht und in zwei Seitenansichten eine weitere Ausführungsform der Erfindung. Im Gegensatz zur Fig. 9 sind die Antriebe 41, 42 hier als Linearantriebe ausgebildet, die zumindest einen Teil der Gegenmassen 31, 32 bilden.

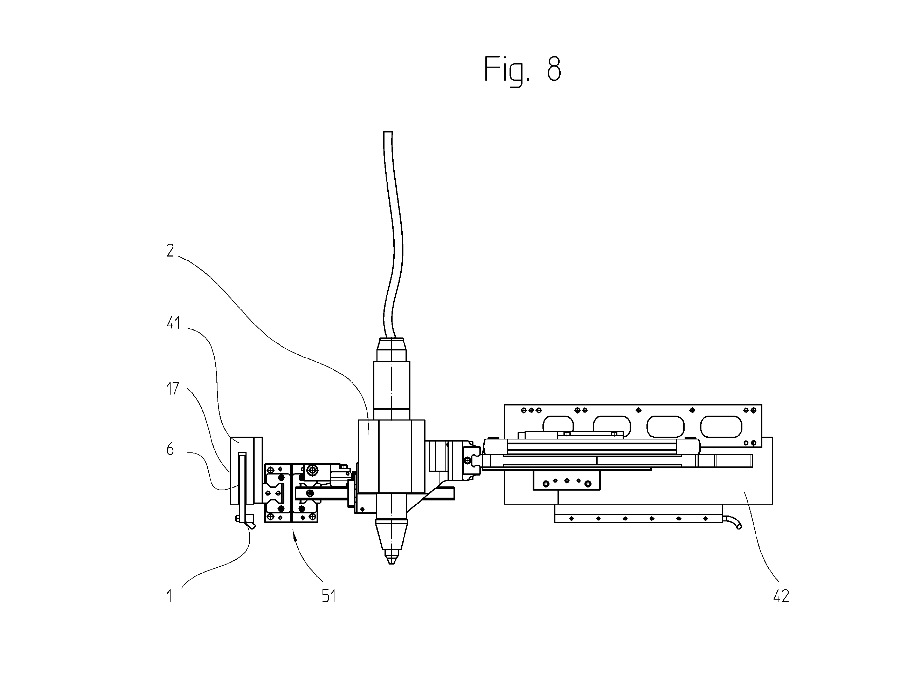

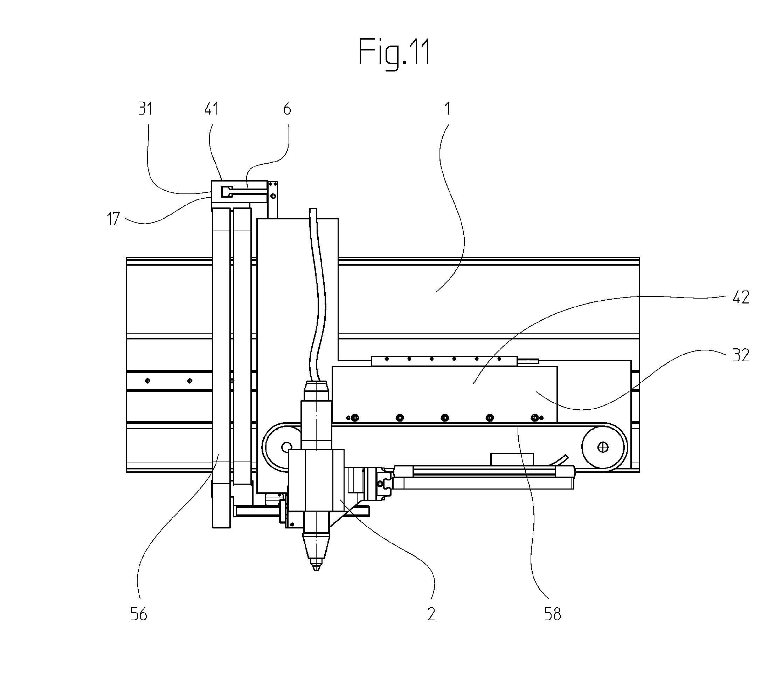

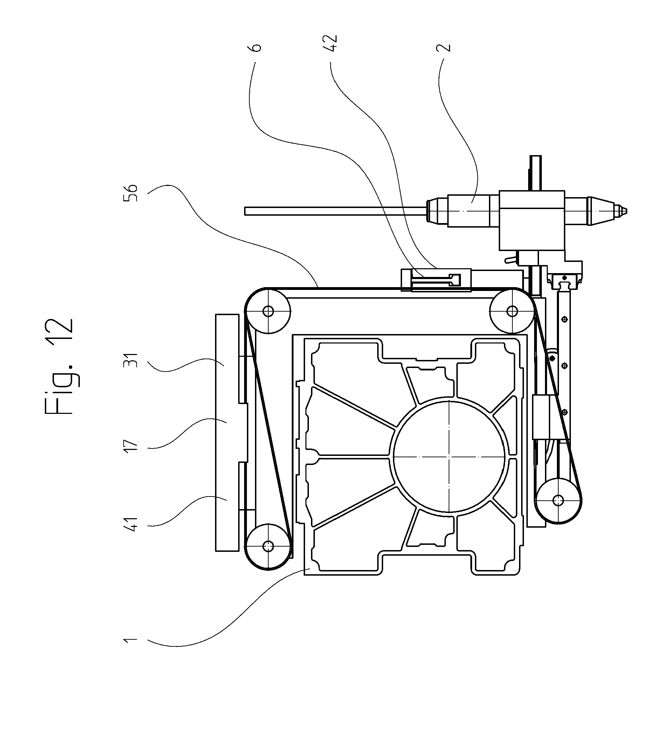

Der erste Antrieb 41 sitzt auf dem Zugmittel 56 und zwar auf dem Abschnitt 58 des Zugmittels 56 und ist somit entlang der fünften Linearachse 15 relativ zur ersten Plattform 1 verschiebbar gelagert. Der erste Antrieb 41 übernimmt die zusätzliche Funktion der ersten Gegenmasse 31, wodurch bei einer Bewegung des ersten Verschiebeelementes 21 einschliesslich der von diesem gehaltenen zweiten Plattform 2 samt Strahlbearbeitungskopf 3 ein Massenausgleich durch die entgegengesetzte Bewegung des Antriebs 41 als Gegenmasse 31 erfolgt. Wie bereits anhand der Fig. 8 erläutert, handelt es sich auch hier jeweils um einen elektromagnetischen Linearantrieb mit einem Primärteil 6 (aus bestrombaren Primärspulen) und einem Sekundärteil 17 (vorzugsweise aus Permanentmagneten). Der Primärteil 6 ist an der ersten Plattform 1 befestigt und der Sekundärteil 17 bildet jeweils die entsprechende Gegenmasse 31 bzw. 32 (Figuren 11 und 12). Der zweite Antrieb 42 ist analog wie der erste Antrieb 41 ausgebildet bzw. an die Bewegungseinheit angebunden.

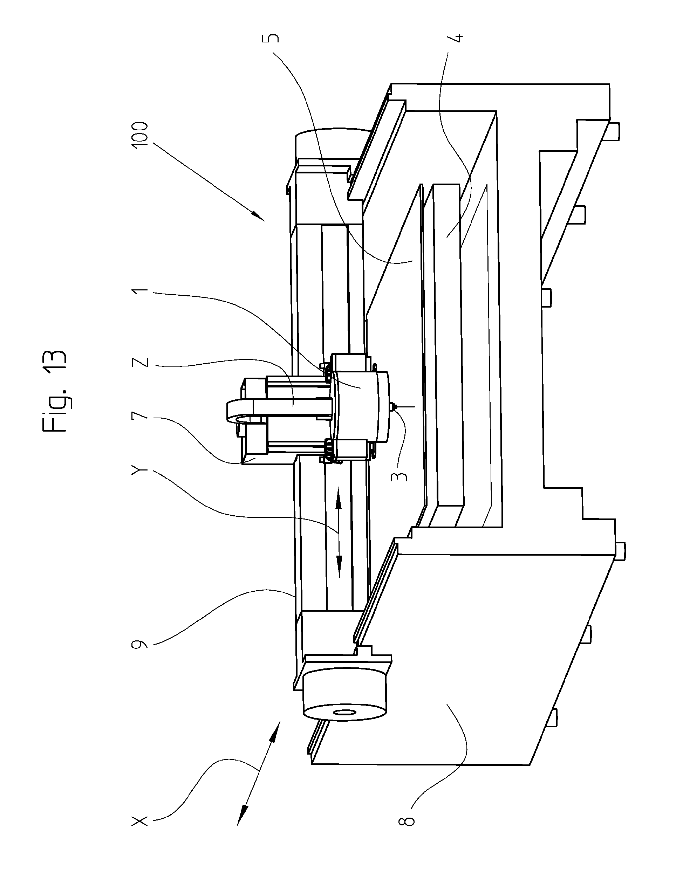

Fig. 13 zeigt abschliessend in einer schematischen Darstellung eine Strahlbearbeitungsvorrichtung 100 als Ganzes mit einem Grundgestell 8, auf dem ein Träger 9 entlang einer linearen Verschiebeachse X verfahrbar angeordnet ist. Auf dem Träger 9 ist die erste Plattform 1 (nur beispielhaft in Form eines Gehäuses und ohne weitere Teile der Bewegungseinheit dargestellt) entlang einer linearen Verschiebeachse Y, die orthogonal zur Verschiebeachse X steht, verfahrbar angeordnet. Unterhalb der ersten Plattform 1 ist eine Werkstückauflage 4 angeordnet, die ein zu bearbeitendes Werkstück 5 trägt. Die erste Plattform 1 ist auf einem Y-Schlitten 7 angeordnet, so dass die erste Plattform 1 als Ganzes relativ zum Träger 9 in Z1-Richtung, welche in diesem Beispiel senkrecht zu der von der Verschiebeachse X und der Verschiebeachse Y aufgespannten Ebene steht, senkrecht zum Werkstück 5 positioniert werden kann.

Die erste Plattform 1 trägt über die zweite Plattform 2 einen Strahlbearbeitungskopf 3, z.B. einen Laserstrahl-Bearbeitungskopf oder einen Fluidstrahl-Bearbeitungskopf, durch den eine Strahlaustrittsachse definiert wird, entlang der bei der Bearbeitung der Strahl austritt (Strahlaustrittsöffnung). Auf der ersten Plattform 1 ist der Strahlbearbeitungskopf 3 derart gelagert, dass verschiedene Bewegungen mit ihm ausführt werden können.

In einer Variante der Erfindung kann eine weitere, "innere" Z-Achse zusätzlich zu der in Fig. 3 eingezeichneten Z-Achse quer zur Bewegungsrichtung (d.h. senkrecht zur ersten bis sechsten Linearachse) der Verschiebeelemente bzw. der Gegenmassen vorgesehen werden. Bei dieser Variante kann der Strahlbearbeitungskopf 3 relativ zur ersten Plattform 1 entlang dieser weiteren Z-Achse verfahren werden.

Diese Variante ist somit dadurch gekennzeichnet, dass der Strahlbearbeitungskopf 3 relativ zur ersten Plattform 1 entlang einer Linearachse verfahrbar ist, die senkrecht zur ersten Linearachse 11 und senkrecht zur zweiten Linearachse 12 steht. Dadurch kann eine exakte vertikale Feineinstellung des Strahlbearbeitungskopfes 3 relativ zum darunterliegenden Werkstück erfolgen.

Die Erfindung ist nicht auf die dargestellten Ausführungsformen beschränkt, sondern kann vielfach abgewandelt und erweitert werden. So kann z.B. der erste Antrieb direkt auf das erste Verschiebeelement einwirken, das die Bewegung über den ersten Kopplungsmechanismus auf die erste Gegenmasse überträgt, und/oder der zweite Antrieb kann direkt auf das zweite Verschiebeelement einwirken, das die Bewegung über den zweiten Kopplungsmechanismus auf die zweite Gegenmasse überträgt. Es wäre grundsätzlich auch möglich das erste Verschiebeelement samt dem ersten Antrieb und der ersten Gegenmasse anders auszugestalten als das zweite Verschiebeelement samt dem zweiten Antrieb und der zweiten Gegenmasse.

### Bezugszeichenliste

- 1: erste Plattform
- 2: zweite Plattform
- 3: Strahlbearbeitungskopf
- 4: Werkstückauflage
- 5: Werkstück
- 6: Primärteil des Linearantriebs
- 7: Schlitten
- 8: Grundgestell
- 9: Träger
- 10: Strahlaustrittsachse
- 11: erste Linearachse
- 12: zweite Linearachse
- 13: dritte Linearachse
- 14: vierte Linearachse
- 15: fünfte Linearachse
- 16: sechste Linearachse
- 17: Sekundärteil des Linearantriebs
- 21: erstes Verschiebeelement
- 22: zweites Verschiebeelement
- 31: erste Gegenmasse
- 32: zweite Gegenmasse
- 41: erster Antrieb
- 42: zweiter Antrieb
- 51: erster Kopplungsmechanismus
- 52: zweiter Kopplungsmechanismus
- 53: Ritzel
- 54: Zahnstange
- 55: Zahnstange
- 56: Zugmittel
- 57: Abschnitt des Zugmittels 56
- 58: Abschnitt des Zugmittels 56
- 59: Gewindespindel
- 60: Abschnitt der Gewindespindel 59
- 61: Abschnitt der Gewindespindel 59
- 100: Strahlbearbeitungsvorrichtung
- X: lineare Verschiebeachse
- Y: lineare Verschiebeachse
- Z1: lineare Verschiebeachse

## Patentansprüche

1. Strahlbearbeitungsvorrichtung (100), insbesondere eine Laserstrahl-Bearbeitungsvorrichtung oder eine Fluidstrahl-Bearbeitungsvorrichtung
mit einer ersten Plattform (1),
mit einer an der ersten Plattform (1) beweglich gelagerten zweiten Plattform (2),
mit einem von der zweiten Plattform (2) gehaltenen Strahlbearbeitungskopf (3) zur Bearbeitung eines Werkstückes (5) mit einem Strahl,
wobei die zweite Plattform (2) mit der ersten Plattform (1) über ein erstes Verschiebeelement (21) und ein zweites Verschiebeelement (22) verbunden ist, und wobei das erste Verschiebeelement (21) an der ersten Plattform (1) entlang einer ersten Linearachse (11) verschiebbar gelagert ist und das zweite Verschiebeelement (22) an der ersten Plattform (1) entlang einer zweiten Linearachse (12) verschiebbar gelagert ist, wobei die erste Linearachse (11) und die zweite Linearachse (12) zueinander geneigt sind, vorzugsweise um 90°,
und wobei die zweite Plattform (2) am ersten Verschiebeelement (21) entlang einer dritten Linearachse (13) verschiebbar gelagert ist und am zweiten Verschiebeelement (22) entlang einer vierten Linearachse (14) verschiebbar gelagert ist, wobei die erste Linearachse (11) und die vierte Linearachse (14) im Wesentlichen parallel zueinander verlaufen und die zweite Linearachse (12) und die dritte Linearachse (13) im Wesentlichen parallel zueinander verlaufen,
und mit einem ersten Antrieb (41), der mit dem ersten Verschiebeelement (21) zusammenwirkt, um das erste Verschiebeelement (21) relativ zur ersten Plattform (1) entlang der ersten Linearachse (11) zu verfahren,
und mit einem zweiten Antrieb (42), der mit dem zweiten Verschiebeelement (22) zusammenwirkt, um das zweite Verschiebeelement (22) relativ zur ersten Plattform (1) entlang der zweiten Linearachse (12) zu verfahren,
mit einer ersten Gegenmasse (31), die an der ersten Plattform (1) entlang einer fünften Linearachse (15) verschiebbar gelagert ist,
und mit einer zweiten Gegenmasse (32), die an der ersten Plattform (1) entlang einer sechsten Linearachse (16) verschiebbar gelagert ist,
wobei die erste Linearachse (11) und die fünfte Linearachse (15) im Wesentlichen parallel zueinander verlaufen und die zweite Linearachse (12) und die sechste Linearachse (16) im Wesentlichen parallel zueinander verlaufen, **dadurch gekennzeichnet, dass**
zwischen dem ersten Verschiebeelement (21) und der ersten Gegenmasse (31) ein erster mechanischer Kopplungsmechanismus (51) geschaltet ist, der bei betätigtem ersten Antrieb (41) ein Verfahren des ersten Verschiebeelementes (21) und der ersten Gegenmasse (31) in zueinander entgegengesetzte Richtungen bewirkt, und/oder
dass zwischen dem zweiten Verschiebeelement (22) und der zweiten Gegenmasse (32) ein zweiter mechanischer Kopplungsmechanismus (52) geschaltet ist, der bei betätigtem zweiten Antrieb (42) ein Verfahren des zweiten Verschiebeelementes (22) und der zweiten Gegenmasse (32) in zueinander entgegengesetzte Richtungen bewirkt.

2. Strahlbearbeitungsvorrichtung nach Anspruch 1, **dadurch gekennzeichnet, dass** der erste Antrieb (41) und/oder der zweite Antrieb (42) ein Linearantrieb ist oder Drehantrieb ist, vorzugsweise ein Torquemotor.

3. Strahlbearbeitungsvorrichtung nach einem der vorhergehenden Ansprüche, **dadurch gekennzeichnet, dass** der erste Antrieb (41) auf der ersten Plattform (1) angeordnet und/oder dass der zweite Antrieb (42) auf der ersten Plattform (1) angeordnet ist.

4. Strahlbearbeitungsvorrichtung nach einem der vorhergehenden Ansprüche, **dadurch gekennzeichnet, dass** zumindest ein Teil des ersten Antriebs (41) zumindest einen Teil der ersten Gegenmasse (31) bildet und/oder dass zumindest ein Teil des zweiten Antriebs (42) zumindest einen Teil der zweiten Gegenmasse (32) bildet.

5. Strahlbearbeitungsvorrichtung nach Anspruch 4, **dadurch gekennzeichnet, dass** der erste Antrieb (41) ein elektromagnetischer Linearantrieb mit einem bestrombaren Primärteil (6) und einem mit dem Primärteil (6) elektromagnetisch zusammenwirkenden Sekundärteil (17) ist, wobei vorzugsweise der Primärteil (6) des ersten Antriebes (41) an der ersten Plattform (1) befestigt ist und der Sekundärteil (17) des ersten Antriebes (41) zumindest einen Teil der ersten Gegenmasse (31) bildet,
**und/oder dass** der zweite Antrieb (42) ein elektromagnetischer Linearantrieb mit einem bestrombaren Primärteil (6) und einem mit dem Primärteil (6) elektromagnetisch zusammenwirkenden Sekundärteil (17) ist, wobei vorzugsweise der Primärteil (6) des zweiten Antriebes (42) an der ersten Plattform (1) befestigt ist und der Sekundärteil (17) des zweiten Antriebes (42) zumindest einen Teil der zweiten Gegenmasse (32) bildet.

6. Strahlbearbeitungsvorrichtung nach einem der vorhergehenden Ansprüche, **dadurch gekennzeichnet, dass** der erste Antrieb (41) direkt auf den ersten Kopplungsmechanismus (51) einwirkt, der die Bewegung des Antriebes (41) auf das erste Verschiebeelement (21) und die erste Gegenmasse (31) überträgt, und/oder dass der zweite Antrieb (42) direkt auf den zweiten Kopplungsmechanismus (52) einwirkt, der die Bewegung des zweiten Antriebes (42) auf das zweite Verschiebeelement (22) und die zweite Gegenmasse (32) überträgt.

7. Strahlbearbeitungsvorrichtung nach einem der vorhergehenden Ansprüche, **dadurch gekennzeichnet, dass** der erste Antrieb (41) direkt auf das erste Verschiebeelement (21) einwirkt, das die Bewegung über den ersten Kopplungsmechanismus (51) auf die erste Gegenmasse (31) überträgt, und/oder dass der zweite Antrieb (42) direkt auf das zweite Verschiebeelement (22) einwirkt, das die Bewegung über den zweiten Kopplungsmechanismus (52) auf die zweite Gegenmasse (32) überträgt.

8. Strahlbearbeitungsvorrichtung nach einem der vorhergehenden Ansprüche, **dadurch gekennzeichnet, dass** der erste Kopplungsmechanismus (51) aus zumindest einem Ritzel (53) und zwei mit dem Ritzel (53) zusammenwirkenden Zahnstangen (54, 55), die sich bei einer Drehung des Ritzels (53) in entgegengesetzte Richtungen bewegen, gebildet wird, wobei eine der Zahnstangen (54) am ersten Verschiebeelement (21) und die andere Zahnstange (55) an der ersten Gegenmasse (31) ausgebildet ist, und/oder dass der zweite Kopplungsmechanismus (52) aus zumindest einem Ritzel (53) und zwei mit dem Ritzel (53) zusammenwirkenden Zahnstangen (54, 55), die sich bei einer Drehung des Ritzels (53) in entgegengesetzte Richtungen bewegen, gebildet wird, wobei eine der Zahnstangen (54) am zweiten Verschiebeelement (22) und die andere Zahnstange (55) an der zweiten Gegenmasse (32) ausgebildet ist.

9. Strahlbearbeitungsvorrichtung nach Anspruch 8, **dadurch gekennzeichnet, dass** die Zahnstangen (54, 55) an gegenüberliegenden Seiten des Ritzels (53) angeordnet sind und in das Ritzel (53) eingreifen, und/oder dass die Drehachse des Ritzels (53) ortsfest zur ersten Plattform (1) ist.

10. Strahlbearbeitungsvorrichtung nach einem der Ansprüche 7 bis 9, **dadurch gekennzeichnet, dass** der Antrieb (41, 42) ein Drehantrieb ist, dessen Drehachse mit der Drehachse des Ritzels (53) zusammenfällt.

11. Strahlbearbeitungsvorrichtung nach einem der vorhergehenden Ansprüche, **dadurch gekennzeichnet, dass** der erste Kopplungsmechanismus (51) aus einem umlaufenden Zugmittel (56), insbesondere einem Riemen, einem Band, einem Seil oder einer Kette, gebildet wird, das in seinem Verlauf zwei, sich bei einer Bewegung des Zugmittels (56) in entgegengesetzte Richtungen bewegende Abschnitte (57, 58) aufweist, wobei das erste Verschiebeelement (21) an einem der beiden Abschnitte (57) des Zugmittels (56) angebunden ist und die erste Gegenmasse (31) am anderen Abschnitt (58) des Zugmittels (56) angebunden ist, und/oder dass der zweite Kopplungsmechanismus (52) aus einem umlaufenden Zugmittel (56), insbesondere einem Riemen, einem Band, einem Seil oder einer Kette, gebildet wird, das in seinem Verlauf zwei, sich bei einer Bewegung des Zugmittels (56) in entgegengesetzte Richtungen bewegende Abschnitte (57, 58) aufweist, wobei das zweite Verschiebeelement (22) an einem der beiden Abschnitte (57) des Zugmittels (56) angebunden ist und die zweite Gegenmasse (32) am anderen Abschnitt (58) des Zugmittels (56) angebunden ist.

12. Strahlbearbeitungsvorrichtung nach einem der vorhergehenden Ansprüche, **dadurch gekennzeichnet, dass** der erste Kopplungsmechanismus (51) aus einer drehbaren Gewindespindel (59), insbesondere einer Kugelgewindespindel, mit zwei, zueinander gegensinnige Gewindesteigung aufweisenden Abschnitten (60, 61) gebildet wird, wobei das erste Verschiebeelement (21) an einem der beiden Abschnitte (61) der Gewindespindel (59) angebunden ist und die erste Gegenmasse (31) am anderen Abschnitt (60) der Gewindespindel (59) angebunden ist, und/oder dass der zweite Kopplungsmechanismus (52) aus einer drehbaren Gewindespindel (59), insbesondere einer Kugelgewindespindel, mit zwei, zueinander gegensinnige Gewindesteigung aufweisenden Abschnitten (60, 61) gebildet wird, wobei das zweite Verschiebeelement (22) an einem der beiden Abschnitte (61) der Gewindespindel (59) angebunden ist und die zweite Gegenmasse (32) am anderen Abschnitt (60) der Gewindespindel (59) angebunden ist, wobei die Gewindespindel (59) vorzugsweise an einem Ende von einem Drehantrieb (41, 42) gehalten und angetrieben wird, während das andere Ende der Gewindespindel (59) ein freies Ende ist.

13. Strahlbearbeitungsvorrichtung nach einem der vorhergehenden Ansprüche, **dadurch gekennzeichnet, dass** die erste, zweite, dritte, vierte, fünfte und/oder sechste Linearachse (11, 12, 13, 14, 15, 16) in Form einer Linearführung, insbesondere einer Schiene, verwirklicht ist, **und/oder dass** der Strahlbearbeitungskopf (3) relativ zur ersten Plattform (1) entlang einer Linearachse verfahrbar ist, die senkrecht zur ersten Linearachse (11) und senkrecht zur zweiten Linearachse (12) steht.

14. Strahlbearbeitungsvorrichtung nach einem der vorhergehenden Ansprüche, **dadurch gekennzeichnet, dass** die erste Plattform (1), die zweite Plattform (2), das erste und zweite Verschiebeelement (21, 22) und der erste und zweite Antrieb (41, 42) zusammen eine Parallelkinematik bilden.

15. Strahlbearbeitungsvorrichtung nach einem der vorhergehenden Ansprüche, **dadurch gekennzeichnet, dass** die erste Plattform (1) auf einem Träger (9) ausgebildet ist, der in einer Ebene verfahrbar ist, vorzugsweise entlang einer ersten linearen Verschiebeachse (X) und entlang einer zweiten linearen Verschiebeachse (Y), wobei die linearen Verschiebeachsen (X, Y) vorzugsweise orthogonal zueinander stehen.
